# EUROPÄISCHE PATENTSCHRIFT

(11) **EP 1 570 323 B1**
(45) Veröffentlichungstag und Bekanntmachung des Hinweises auf die Patenterteilung: **22.11.2006**
(21) Anmeldenummer: 03773418.3
(22) Anmeldetag: 03.12.2003
(51) Int. Cl.: G05B 19/418

(54) **SYSTEM ZUR ERFASSUNG VON PRODUKTIONSDATEN EINER ANZAHL VON TEXTILMASCHINEN**
SYSTEM FOR DETECTING THE PRODUCTION DATA OF A NUMBER OF TEXTILE MACHINES
SYSTEME DE DETECTION DE DONNEES DE PRODUCTION D'UNE PLURALITE DE MACHINES TEXTILES

(30) Priorität: 11.12.2002 CH 212002
(43) Veröffentlichungstag der Anmeldung: 07.09.2005
(73) Patentinhaber: TEXTILMA AG, 6362 Stansstad (CH)
(72) Erfinder: SPEICH, Francisco, CH-5073 Gipf-Oberfrick (CH)
(74) Vertreter: Schmauder, Klaus Dieter
(86) Internationale Anmeldenummer: PCT/CH2003/000799
(87) Internationale Veröffentlichungsnummer: WO 2004/053604

(56) Entgegenhaltungen:
- EP-A- 1 128 244
- DE-A- 4 119 260
- DE-A- 10 055 025

## Beschreibung

### Technisches Gebiet

Die Erfindung betrifft ein System zur Ermittlung von Produktionsdaten und Steuern einer Anzahl von Web- oder Wirkmaschinen, gemäss Oberbegriff des Anspruches 1.

### Stand der Technik

Aus der DE 100 55 025 A ist ein Systeme zur Steuerung einer Anzahl von Spinnereivorbereitungsmaschinen mittels eines Zentralcomputers bekannt. Das System besteht im Wesentlichen aus Steuerungscomputern zur Steuerung der Spinnereivorbereitungsmaschinen und zur Erfassung der Betriebsdaten für jede Spinnereivorbereitungsmaschine, einem Server und einem Zentralcomputer. Die Steuerungscomputer sind über ein Kabelnetzwerk mit dem Zentralcomputer verbunden. Das Kabelnetzwerk enthält jeweils einen Server und ein Modem, die den Steuerungscomputern bzw. dem Zentralcomputer zugeordnet sind und die über eine Datenleitung verbunden sind.

Aus der EP 1 128 244 A ist es bekannt, eine Anzahl Werkzeugmaschinen insbesondere Spritzgussmaschinen über ein Netzwerk mit einem Zentralcomputer zu verbinden, wobei die einzelnen Werkzeugmaschinen zunächst über eine Funkverbindung mit einem gemeinsamen Server verbunden sind, der wiederum über eine Drahtleitung mit dem Zentralcomputer verbunden ist.

Bei den genannten Spinnereivorbereitungsmaschinen und Werkzeugmaschinen wie Spritzgussmaschinen handelt es sich um Maschinen, bei denen Produkte nach einem festen Programm hergestellt werden und somit nur die Produktionsparameter zu überwachen und zu steuern sind. Diesen Druckschriften können jedoch keine Hinweise entnommen werden, dass die Netzwerke auch zur Steuerung von Web- oder Wirkmaschinen geeignet seien, die nach wechselnden Musterprogrammen arbeiten.

Web- oder Wirkmaschinen umfassen jeweils eine Reihe von Funktionsgruppen, für Webmaschinen sind dies z.B. Antrieb, Fachbildung, Schussfadeneintragung und Warenabzug. Die Funktionsgruppen werden durch den Steuerungscomputer gemäss einem Webprogramm gesteuert. Das Webprogramm umfasst die Betriebsdaten für den zu webenden Artikel, z.B. die Musterungsdaten. Das Webprogramm wird vor Ort in den Steuerungsspeicher geladen. Danach wird der Artikel angewoben, wobei die hierbei neu ermittelten Betriebsdaten vom Steuerungscomputer fortlaufend erfasst werden. Ist das Anweben beendet, werden die Betriebsdaten z.B. mit einem Quittungssignal im Steuerungscomputer gespeichert. Die Betriebsdaten könnten vor Ort auf einem Datenträger gespeichert werden.

In den Textilfabriken stehen eine grosse Anzahl von unterschiedlichen Web- oder Wirkmaschinen. Jede Web- oder Wirkmaschine enthält verschiedene Funktionsgruppen, die jeweils von einem vorstehend beschrieben System gesteuert werden können.

Ein derartiges System hat die Nachteile, dass je nach Anzahl der Web- oder Wirkmaschinen und der Funktionsgruppen pro Web- oder Wirkmaschine ein entsprechend umfangreiches Kabelnetzwerk erforderlich ist, dass für verschiedene Arten von Web- oder Wirkmaschinen unterschiedliche Kabelnetzwerke erforderlich sind und dass der Aufwand und die Kosten für diese Netzwerke hoch sind und daher die Entfernung zwischen den Web- oder Wirkmaschine und dem Zentralcomputer begrenzt ist

### Darstellung der Erfindung

Der Erfindung liegt die Aufgabe zugrunde ein verbessertes System zum Ermitteln der Produktionsdaten und Steuerung einer Anzahl von Web- oder Wirkmaschinen zu schaffen.

Die Lösung dieser Aufgabe ergibt sich aus dem unabhängigen Anspruch 1. Weiterbildungen sind Gegenstand der abhängigen Ansprüche.

Man hat in überraschender Weise festgestellt, dass sich auch eine Anzahl nach wechselnden Musterprogrammen arbeitende Web- oder Wirkmaschinen mit einem Zentralcomputer auf einfache Weise steuern lassen und die Produktionsdaten erfasst werden können, wenn die jeder Web- oder Wirkmaschine zugeordneten Steuerungscomputer jeweils über Mittel zur drahtlosen Signalübertragung mit mindestens einer ersten Übertragungseinheit verbunden sind, wobei letztere mindestens abschnittweise mittels einer Datenleitung mit dem Zentralcomputer verbunden ist. Die erste Übertragungseinheit kann mittels einer Datenleitung, wie vorzugsweise einer Telefonleitung direkt mit dem Zentralcomputer oder mit einer zweiten Übertragungseinheit verbunden sein, wobei letztere wiederum über Mittel zur drahtlosen Signalübertragung mit dem Zentralcomputer verbunden sein kann.

Als vorteilhaft erweist sich, wenn die Mittel zur drahtlosen Signalübertragung ein Funknetzwerk zur Übertragung nach dem WLAN- oder Bluetooth-Standard bilden. Diese Funknetzwerke erlauben eine bidirektionale Übertragung, so dass neben der Ermittlung der Produktionsdaten auch Betriebsdaten und Musterdaten an die Steuerungscomputer der Web- oder Wirkmaschinen übermittelt werden können.

Es ist von Vorteil, wenn das Mittel zur drahtlosen Signalübertragung eine Sende- und Empfangseinrichtung ist, die in den zugeordneten Geräten, wie den Steuerungscomputern, Übertragungseinheiten und dem Zentralcomputer integriert sind. Dadurch können die Betriebsdaten von verschiedenen Arten von Web- oder Wirkmaschinen mit dem gleichen System erfasst werden.

Dem Funknetzwerk für die Steuerungscomputer und der ersten Übertragungseinheit kann eine Einheit zur Erweiterung der Funkzelle zugeordnet werden. Dies hat den Vorteil, dass das Funknetzwerk an die Anzahl der Web- oder Wirkmaschinen angepasst werden kann.

Durch die Verbindung der Übertragungseinheiten über eine Datenleitung wie insbesondere eine Fernsprechleitung kann der Zentralcomputer vom Aufstellungsort der Web- oder Wirkmaschinen entfernt angesiedelt werden.

Mit Vorteil ist der Zentralcomputer ein CAM- Computer, dem ein Drucker zugeordnet ist. Damit wird die Möglichkeit geschaffen, aus den Betriebsdaten die Produktionsdaten der Textilfabrik zu ermitteln. Ferner können die Produktionsdaten zwecks Produktionslenkung weitergeleitet werden.

Dem System kann ein mobiler Computer, wie ein Laptop, Handy oder PC-Tablett zugeordnet werden. Mit einem solchen mobilen Computer kann innerhalb des Funk- Nahverkehrsnetzes auf die Steuerungscomputer und den Zentralcomputer zugegriffen werden. Ist ein Funk- Fernverkehrsnetz vorhanden wird die Möglichkeit des Zugriffs erweitert.

Die gleichzeitig zu überwachenden Web- oder Wirkmaschinen können von verschiedener Art sein, vorzugsweise sind sie jedoch von gleicher Art.

### Kurze Beschreibung der Zeichnungen

Nachfolgend wird die Erfindung anhand der beiliegenden Zeichnungen erläutert, dabei zeigen:
- Fig.1: ein Blockschema einer Ausführung des Systems und
- Fig.2: eine Modifikation der Ausführung des Systems nach Fig.1.

### Wege zur Ausführung der Erfindung

Im Folgenden wird das System in der Anwendung bei Webmaschinen beschrieben, die einen Steuerungscomputer 1.1 bis 1.n aufweisen.

Das System besteht im wesentlichen aus einem Zentralcomputer 2, einer Anzahl von Sende- und Empfangseinheiten 3, die in den Steuerungscomputern 1.1 bis 1.n und in den Zentralcomputer 2 integriert sind, eine erste Übertragungseinheit 4, die den Steuerungscomputern zugeordnet ist, und eine zweite Übertragungseinheit 5, die dem Zentralcomputer 2 zugeordnet ist. Die Sende- und Empfangseinheiten 3 bilden mit der jeweils zugeordnet Übertragungseinheit ein Funknetzwerk bzw. eine Funkzelle zur Signalübertragung nach dem WLAN- oder Bluetooth-Standard. Die Übertragungseinheiten 4,5 weisen jeweils eine Sende- und Empfangseinheit 3 und eine Modulator/Demodulator- Einheit auf und sind über eine Datenleitung vorzugsweise eine Fernsprechleitung 6 mit einander verbunden. So ist es möglich eine Gruppe von Webmaschinen beispielsweise innerhalb eines Maschinensaales drahtlos mit einer Übertragungseinheit zu verbinden, die wiederum mit einem beliebig weit entfernten Zentralcomputer kommunizieren können. Innerhalb eines Maschinensaales können alle Webmaschinen mit einer Übertragungseinheit verbundene sein oder es können einzelne Gruppen von Webmaschinen jeweils drahtlos mit einer zugeordneten Übertragungseinheit verbunden sein.

Dem Funknetzwerk für die Steuerungscomputer 1.1 bis 1.n und die erste Übertragungseinheit 4 kann eine Einheit 9 zur Erweiterung des Funknetzwerks bzw. der Funkzelle zugeordnet sein, die an der Übertragungseinheit 4 vorgesehen ist.

Der Zentralcomputer 2 ist ein CAM- Computer. Der CAM- Computer erfasst zur Hauptsache die Betriebsdaten. Ferner ist vorgesehen ein Stoppsignal und ein Startsignal an die Steuerungscomputer 1.1 bis 1.n zu übermitteln. Dem CAM- Computer sind ein Drucker 11 zur Aufzeichnung der Betriebsdaten und ein Scanner 10 zugeordnet. Mit dem Scanner 10 wird eine in der herzustellenden Warenbahn wiederzugebende Abbildung digitalisiert und als Musterungsdaten in dem CAM- Computer gespeichert. Der CAM- Computer übermittelt die Musterungsdaten an den Steuerungscomputer 1 der jeweiligen Webmaschine. Die digitalisierten Musterdaten werden im Zentralcomputer oder im Steuerungscomputer in von der Webmaschine verarbeitbare Maschinendaten umgewandelt.

Dem System ist ein mobiler Computer 7 wie ein Laptop, Handy oder PC-Tablett zugeordnet, mit dem die Daten der Steuerungscomputer 1.1 bis 1.n und/oder des Zentralcomputers 2 abgefragt und ein Stoppsignal an die Steuerungscomputer gesendet werden können.

Bei den erfassten Betriebsdaten handelt es sich beispielsweise um die Drehzahl der Webmaschine, die Laufzeit der Webmaschine, den Stillstand der Webmaschine, die Ursache des Stillstands, die Stillstandszeit, die Schusszahl, die Zahl der gewobenen Muster usw. Aus diesen Betriebsdaten werden der Zustand der Webmaschine als auch die Produktionsdaten der hergestellten Waren ermittelt. Hierzu gehören z.B. der hergestellte Artikel und die Menge des hergestellten Artikels. Die Betriebsdaten und/oder die Produktionsdaten werden zur Produktionslenkung herangezogen.

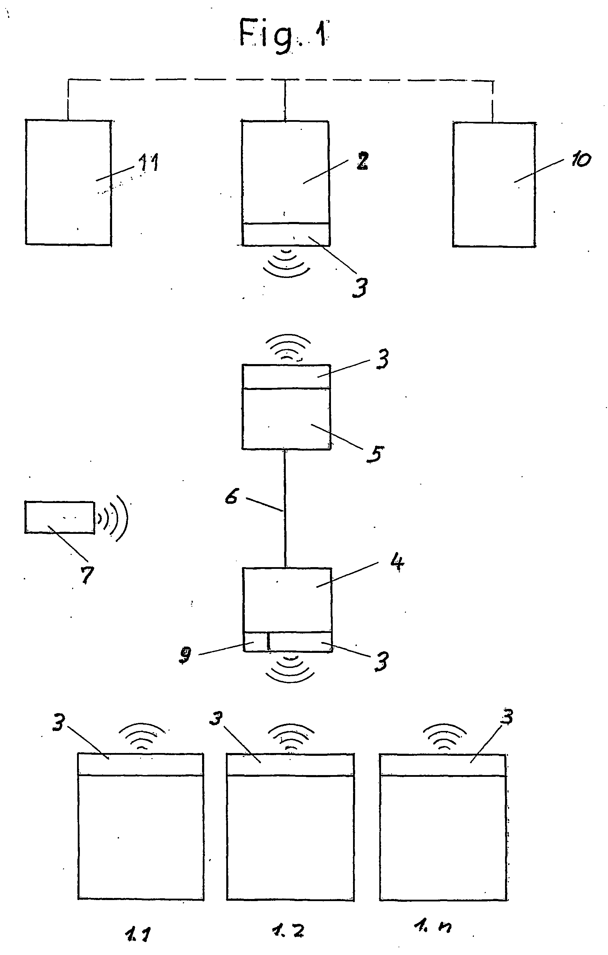

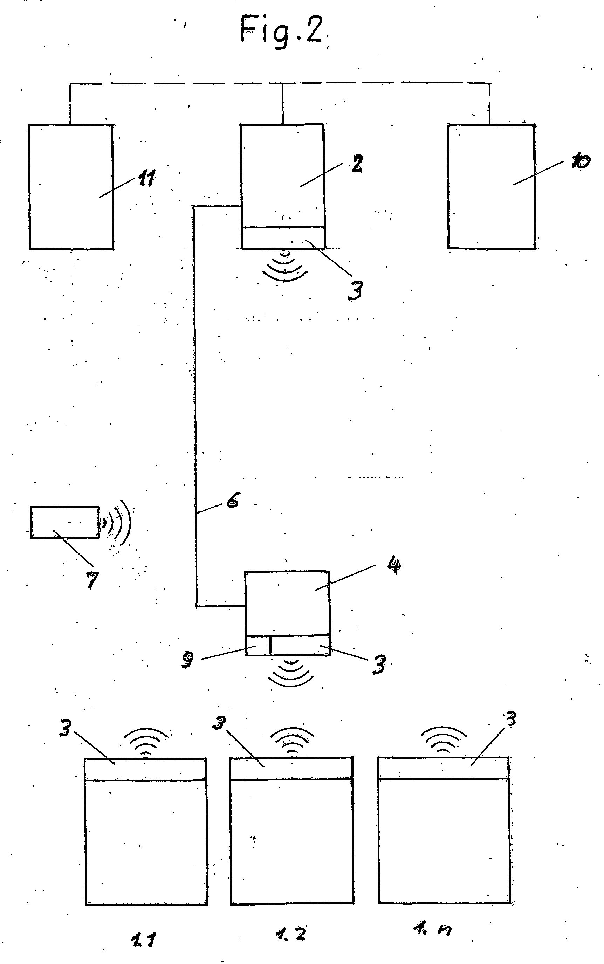

Die Ausführung nach Fig.2 unterscheidet sich von der Ausführung nach Fig.1 lediglich dadurch, dass die erste Übertragungseinheit 4 über die Datenleitung 6 direkt mit dem Zentralcomputer 2 verbunden ist.

Das System der Figuren 1 und 2 umfasst Steuerungscomputer 1.1 bis 1.n zur Steuerung der Webmaschine und zur Erfassung von Betriebsdaten, z.B. die Drehzahl, Stillstand, Ursache des Stillstands, usw. für jede Webmaschine und einen Zentralcomputer 2 zur Ermittlung der Produktionsdaten. Die Steuerungscomputer 1.1 bis 1.n und der Zentralcomputer 2 weisen jeweils Mittel 3 zur drahtlosen Signalübertragung auf und bilden mit einer jeweils zugeordneten Übertragungseinheit 4,5 ein Funknetzwerk zur Signalübertragung nach den WLAN- oder Bluetooth-Standard. Die Übertragungseinheiten 4,5 sind über eine Telefonleitung 6 verbunden, so dass die Steuerungscomputer und der Zentralcomputer in einer beliebigen Entfernung voneinander aufgestellt werden können. Damit werden der Aufwand für das Netzwerk wesentlich verringert und eine zentrale Ermittlung der Produktionsdaten und weiter eine zentrale Produktionslenkung erreicht. Die in einer Webmaschine zur Herstellung der Ware erforderlichen Herstellungsdaten können in dem Steuerungscomputer erzeugt werden.

## Patentansprüche

1. System zum Ermitteln der Produktionsdaten und Steuern einer Anzahl von Web- oder Wirkmaschinen, enthaltend einen Steuerungscomputer (1.1 bis 1.n) für jede Web- oder Wirkmaschine und einen Zentralcomputer (2), die vernetzt sind, **dadurch gekennzeichnet, dass** die Steuerungscomputer (1.1 bis 1.n) jeweils über Mittel (3) zur drahtlosen Signalübertragung mit mindestens einer ersten Übertragungseinheit (4) verbunden sind, wobei letztere mindestens abschnittweise mittels einer Datenleitung mit dem Zentralcomputer (2) verbunden ist.

2. System nach Anspruch 1, **dadurch gekennzeichnet, dass** der Zentralcomputer (2) über Mittel (3) zur drahtlosen Signalübertragung mit einer zweiten Übertragungseinheit verbunden ist.

3. System nach Anspruch 1, **dadurch gekennzeichnet, dass** die Mittel (3) zur drahtlosen Signalübertragung ein Funknetzwerk zur Signalübertragung nach dem WLAN- oder Bluetooth-Standard bilden.

4. System nach Anspruch 1, **dadurch gekennzeichnet, dass** die Mittel (3) zur drahtlosen Signalübertragung eine Sende- und Empfangseinheit aufweisen, die in dem jeweiligen Anschlussgerät integriert sind.

5. System nach Anspruch 1 oder 2, **dadurch gekennzeichnet, dass** mindestens dem Funknetzwerk für die Steuerungscomputer (1.1 bis 1.n) und der ersten Übertragungseinheit (4) eine Einheit (9) zur Erweiterung der Funkzelle zugeordnet ist.

6. System nach Anspruch 1, **dadurch gekennzeichnet, dass** die Datenleitung eine Fernsprechleitung (6) ist.

7. System nach Anspruch 2, **dadurch gekennzeichnet, dass** die erste und zweite Übertragungseinheit (4,5) über eine Datenleitung vorzugsweise eine Fernsprechleitung (6) verbunden sind.

8. System nach Anspruch 1, **dadurch gekennzeichnet, dass** der Zentralcomputer (2) ein CAM- Computer zur Ermittlung der Produktionsdaten aus den Betriebsdaten und zur Speicherung von Musterdaten ist.

9. System nach Anspruch 1, **dadurch gekennzeichnet, dass** dem Zentralcomputer (2) ein Drucker (8) zum Aufzeichnen der Betriebsdaten zugeordnet ist.

10. System nach Anspruch 1, **dadurch gekennzeichnet, dass** dem Zentralcomputer ein Scanner (10) zum Digitalisieren von Bilddaten zugeordnet ist.

11. System nach Anspruch 1, **gekennzeichnet durch** einen mobilen Computer (7) wie ein Laptop, Handy oder PC-Tablett zum Abfragen der Daten der Steuerungscomputer (1.1 bis 1.n) und/oder des Zentralcomputers (2).

12. System nach Anspruch 1, **dadurch gekennzeichnet, dass** digitalisierte Daten im Zentralcomputer oder im Steuerungscomputer in von der Web- oder Wirkmaschine verarbeitbare Maschinendaten umwandelbar sind.

## Claims

1. A system for determining the production data of and controlling a number of weaving or knitting machines, containing a control computer (1.1 to 1.n) for each weaving or knitting machine and a central computer (2), which are networked, **characterized in that** the control computers (1.1 to 1.n) are respectively connected via wireless signal transmission means (3) to at least a first transmission unit (4), the latter being at least partially connected to the central computer (2) by means of a data line.

2. The system as claimed in claim 1, **characterized in that** the central computer (2) is connected via wireless signal transmission means (3) to a second transmission unit.

3. The system as claimed in claim 1, **characterized in that** the wireless signal transmission means (3) form a radio network for signal transmission according to the WLAN or Bluetooth standard.

4. The system as claimed in claim 1, **characterized in that** the wireless transmission means (3) have a send and receive unit, these being integrated into the respective terminal device.

5. The system as claimed in claim 1 or 2, **characterized in that** a unit (9) for expanding the radio cell is assigned at least to the radio network for the control computers (1.1 to 1.n) and to the first transmission unit (4).

6. The system as claimed in claim 1, **characterized in that** the data line is a telephone line (6).

7. The system as claimed in claim 2, **characterized in that** the first and second transmission unit (4, 5) are connected via a data line, preferably a telephone line (6).

8. The system as claimed in claim 1, **characterized in that** the central computer (2) is a CAM computer for determining the production data from the operating data and for storing pattern data.

9. The system as claimed in claim 1, **characterized in that** a printer (8) for recording the operating data is assigned to the central computer.

10. The system as claimed in claim 1, **characterized in that** a scanner (10) for digitizing image data is assigned to the central computer (2).

11. The system as claimed in claim 1, **characterized by** a mobile computer (7) such as a laptop, mobile phone or tablet PC for querying the data of the control computers (1.1 to 1.n) and/or of the central computer (2).

12. The system as claimed in claim 1, **characterized in that** digitized data can be converted in the central computer or in the control computer into machine data processable by the weaving or knitting machine.

## Revendications

1. Système de détermination des données de production et de commande d'un certain nombre de métiers à tisser ou de machines à tricoter, qui comprend un ordinateur de commande (1.1 à 1.n) pour chaque métier à tisser ou chaque machine à tricoter et un ordinateur central (2) qui sont rassemblés en réseau, **caractérisé en ce que** les ordinateurs de commande (1.1 à 1.n) sont tous reliés à au moins une première unité de transmission (4) par des moyens (3) de transmission sans fil de signaux, au moins certaines parties de l'unité de transmission étant reliées à l'ordinateur central (2) au moyen d'un conducteur de données.

2. Système selon la revendication 1, **caractérisé en ce que** l'ordinateur central (2) est relié à une deuxième unité de transmission par des moyens (3) de transmission sans fil de signaux.

3. Système selon la revendication 1, **caractérisé en ce que** les moyens (3) de transmission sans fil de signaux forment un réseau radio de transmission de signaux qui fonctionne selon les normes WLAN ou "Bluetooth".

4. Système selon la revendication 1, **caractérisé en ce que** les moyens (3) de transmission sans fil de signaux présente une unité d'émission et une unité de réception qui sont intégrées dans chaque appareil de raccordement.

5. Système selon les revendications 1 ou 2, **caractérisé en ce qu'**une unité (9) d'élargissement de la cellule radio est associée au moins au réseau radio qui relie les ordinateurs de commande (1.1 à 1.n) et la première unité de transmission (4).

6. Système selon la revendication 1, **caractérisé en ce que** le conducteur de commande est une ligne téléphonique (6).

7. Système selon la revendication 2, **caractérisé en ce que** la première et la deuxième unité de transmission (4, 5) sont reliées par un conducteur de données, de préférence une ligne téléphonique (6).

8. Système selon la revendication 1, **caractérisé en ce que** l'ordinateur central (2) est un ordinateur CAM qui détermine les données de production à partir des données de fonctionnement et qui conserve en mémoire des données de motif.

9. Système selon la revendication 1, **caractérisé en ce qu'**une imprimante (8) destinée à imprimer des données de fonctionnement est associée à l'ordinateur central (2).

10. Système selon la revendication 1, **caractérisé en ce qu'**un numériseur (10) qui numérise des données d'image est associé à l'ordinateur central (2).

11. Système selon la revendication 1, **caractérisé par** un ordinateur mobile (7), par exemple un ordinateur portable, un organiseur ou une carte P.C. qui permettent de consulter les données des ordinateurs de commande (1.1 1.n) et/ou de l'ordinateur central (2).

12. Système selon la revendication 1, **caractérisé en ce que** les données numérisées conservées dans l'ordinateur central ou dans l'ordinateur de commande peuvent être converties en données machine aptes à être traitées par le métier à tisser ou la machine à tricoter.
